# EUROPÄISCHE PATENTSCHRIFT

(11) **EP 3 300 242 B1**
(45) Veröffentlichungstag und Bekanntmachung des Hinweises auf die Patenterteilung: **28.10.2020**
(21) Anmeldenummer: 16190787.8
(22) Anmeldetag: 27.09.2016
(51) Int. Cl.: H02M 7/487

(54) **REGELUNG EINES DREI-LEVEL-WECHSELRICHTERS**
REGULATION OF A THREE-LEVEL INVERTER
RÉGLAGE D'UN ONDULEUR À TROIS NIVEAUX

(43) Veröffentlichungstag der Anmeldung: 28.03.2018
(73) Patentinhaber: Siemens Aktiengesellschaft, 80333 München (DE)
(72) Erfinder: Hofmann, Martin, 97464 Niederwerm (DE); Koch, Jochen, 97464 Niederwerrn (DE); Neumann, Lukas, 97657 Sandberg (DE); Schäfer, Markus, 97453 Schonungen (DE); Wießmann, Harald, 91058 Erlangen (DE)

(56) Entgegenhaltungen:
- SCHAFER MARKUS ET AL: "Multilevel direct current control for grid-connected inverters", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8. September 2015 (2015-09-08), Seiten 1-7, XP032800130, DOI: 10.1109/EPE.2015.7309127 [gefunden am 2015-10-27]
- RODRIGUEZ J ET AL: "Multilevel Converters: An Enabling Technology for High-Power Applications", PROCEEDINGS OF THE IEEE, IEEE. NEW YORK, US, Bd. 97, Nr. 11, 1. November 2009 (2009-11-01), Seiten 1786-1817, XP011278598, ISSN: 0018-9219, DOI: 10.1109/JPROC.2009.2030235
- ACKVA ANSGAR ET AL: "Novel line-side inverter with active filter option: Two paralleled inverters with high speed direct current control algorithms", 2013 4TH IEEE INTERNATIONAL SYMPOSIUM ON POWER ELECTRONICS FOR DISTRIBUTED GENERATION SYSTEMS (PEDG), IEEE, 8. Juli 2013 (2013-07-08), Seiten 1-6, XP032586205, DOI: 10.1109/PEDG.2013.6785635 [gefunden am 2014-04-09]
- JAE HYEONG SEO ET AL: "A New Simplified Space-Vector PWM Method for Three-Level Inverters", IEEE TRANSACTIONS ON POWER ELECTRONICS, INSTITUTE OF ELECTRICAL AND ELECTRONICS ENGINEERS, USA, Bd. 16, Nr. 4, 1. Juli 2001 (2001-07-01), XP011043576, ISSN: 0885-8993

## Beschreibung

Die Erfindung betrifft ein Verfahren und eine Vorrichtung zur Regelung eines dreiphasigen Drei-Level-Wechselrichters.

Unter einem Drei-Level-Wechselrichter, der auch als Dreipunktwechselrichter bezeichnet wird, wird ein Wechselrichter verstanden, der gepulste Phasenspannungen erzeugt, die jeweils drei Spannungswerte annehmen können. Dazu weist der Drei-Level-Wechselrichter für jede Phase eine Schalteinheit mit drei Phasenschaltzuständen auf, durch die die Phasenspannung der Phase jeweils auf einen der drei Spannungswerte gelegt wird.

Zwei der drei Spannungswerte sind durch Anschlussspannungen vorgegeben, die jeweils an einem Anschluss eines gleichspannungsseitigen Zwischenkreises des Drei-Level-Wechselrichters anliegen. Der dritte Spannungswert wird hier als Mittelpunktspannung des Drei-Level-Wechselrichters bezeichnet und liegt zwischen den beiden Anschlussspannungen. Die Mittelpunktspannung ergibt sich aus dem elektrischen Potential in einem Mittelpunkt des Zwischenkreises, der üblicherweise über Zwischenkreiskondensatoren mit den beiden Anschlüssen des Zwischenkreises verbunden ist.

Um die Vorteile eines Drei-Level-Wechselrichters optimal nutzen zu können und die Zwischenkreiskondensatoren nicht zu überlasten, sollte die Mittelpunktspannung der Mittelwert der beiden Anschlussspannungen des Zwischenkreises sein, damit die Differenzen der Mittelpunktspannung von den beiden Anschlussspannungen betragsmäßig gleich groß sind und an jedem Zwischenkreiskondensator dieselbe Spannung anliegt. Bestimmte Schaltzustände eines Drei-Level-Wechselrichters können den Zwischenkreis jedoch unsymmetrisch belasten und dadurch zu Abweichungen der Mittelpunktspannung von dem Mittelwert der beiden Anschlussspannungen führen.

M. Schäfer et al: "Multilevel direct current control for grid-connected inverters", 2015 17th European Conference on Power Electronics and Applications (EPE'15 ECCE-Europe), Seiten 1-7, DOI: 10.1109/EPE.2015.7309127 offenbart ein Verfahren zur direkten Stromregelung der Ströme von Multilevel-Wechselrichtern.

Der Erfindung liegt die Aufgabe zugrunde, eine verbesserte Regelung eines Drei-Level-Wechselrichters anzugeben, die insbesondere eine Regelung der Mittelpunktspannung des Drei-Level-Wechselrichters umfasst.

Die Aufgabe wird erfindungsgemäß durch die Merkmale des Anspruchs 1 gelöst.

Vorteilhafte Ausgestaltungen der Erfindung sind Gegenstand der Unteransprüche.

Bei einem erfindungsgemäßen Verfahren zur Regelung eines dreiphasigen Drei-Level-Wechselrichters werden Phasenströme des Drei-Level-Wechselrichters mit einer direkten Hysteresestromregelung anhand von mehreren, eine Raumzeigergruppe bildenden Raumzeigern geregelt. Ferner wird eine Mittelpunktspannung eines gleichspannungsseitigen Zwischenkreises des Drei-Level-Wechselrichters geregelt, indem die zur Regelung der Phasenströme verwendete Raumzeigergruppe aus mehreren zueinander redundanten Raumzeigergruppen in Abhängigkeit von der Mittelpunktspannung ausgewählt wird.

Unter einem Raumzeiger wird hier ein Vektor in einem Raumzeigerdiagramm verstanden, der eine relative Größe und Phasenlage der Phasenspannungen des Drei-Level-Wechselrichters darstellt. Als zueinander redundante Raumzeigergruppen werden Raumzeigergruppen bezeichnet, die sich voneinander nur durch redundante Raumzeiger unterscheiden. Redundante Raumzeiger repräsentierten verschiedene Schaltzustände eines Drei-Level-Wechselrichters, die (zumindest annähernd) dieselben Differenzen zwischen den einzelnen Phasenspannungen des Drei-Level-Wechselrichters erzeugen und daher auch (zumindest annähernd) dieselbe Wirkung auf eine an den Drei-Level-Wechselrichter wechselspannungsseitig angeschlossene Last haben. Redundante Raumzeiger liegen in dem Raumzeigerdiagramm aufeinander.

Unter einer Hystereseregelung wird eine Regelung verstanden, bei der die Regelgröße in einem Toleranzbereich um einen Sollwert gehalten wird. Der Toleranzbereich wird im Folgenden als Hysteresefenster bezeichnet.

Unter einer direkten Stromregelung wird eine Stromregelung verstanden, bei der ein Pulsmuster für die gepulsten Phasenspannungen direkt aus einem Stromfehler abgeleitet wird. Demgegenüber wird bei einer indirekten Stromregelung zunächst ein Spannungssollwert ermittelt und anhand dieses Spannungswertes wird das Pulsmuster bestimmt.

Die Erfindung kombiniert eine direkte Hysteresestromregelung der Phasenströme eines Drei-Level-Wechselrichters mit einer Regelung einer Mittelpunktspannung des Drei-Level-Wechselrichters.

Verglichen mit einer auf Pulsweitenmodulation basierenden indirekten Stromregelung ermöglicht eine direkte Hysteresestromregelung der Phasenströme vorteilhaft eine höhere Dynamik und Robustheit, beispielsweise gegenüber Änderungen von Parametern der Regelstrecke, da bei einer auf Pulsweitenmodulation basierenden indirekten Stromregelung die innerhalb der Pulsperioden verwendeten Pulsmuster der Pulsweitenmodulation vorausberechnet werden müssen.

Die Erfindung ermöglicht darüber hinaus, diese Vorteile einer direkten Hysteresestromregelung der Phasenströme mit den Vorteilen eines Drei-Level-Wechselrichters optimal nutzen zu können, indem auch die Mittelpunktspannung des Drei-Level-Wechselrichters geregelt wird.

Die Erfindung nutzt aus, dass redundante Raumzeiger zwar Schaltzustände repräsentieren, die (zumindest annähernd) dieselben Differenzen zwischen den einzelnen Phasenspannungen erzeugen, jedoch unterschiedliche Auswirkungen auf die Mittelpunktspannung haben, so dass die Mittelpunktspannung durch den Wechsel von einer bisher zur Regelung verwendeten Raumzeigergruppe zu einer dazu redundanten Raumzeigergruppe geändert werden kann.

Eine Ausgestaltung der Erfindung sieht vor, dass zur Regelung der Mittelpunktspannung ein Hysteresefenster für die Mittelpunktspannung vorgegeben wird, und dass, wenn die Mittelpunktspannung das Hysteresefenster verlässt, eine andere Raumzeigergruppe als eine bisher verwendete Raumzeigergruppe aus den zueinander redundanten Raumzeigergruppen zur Regelung der Phasenströme ausgewählt wird, um die Mittelpunktspannung in das Hysteresefenster zurückzuführen. Diese Ausgestaltung der Erfindung reduziert vorteilhaft die Anzahl von Schalthandlungen zur Regelung des Drei-Level-Wechselrichters und dadurch verursachte Schaltverluste, indem die Regelung der Phasenströme durch die Regelung der Mittelpunktspannung nur dann beeinflusst wird, wenn die Mittelpunktspannung ein vorgegebenes Hysteresefenster verlässt, sonst aber durch die Mittelpunktspannung nicht beeinflusst wird.

Eine weitere Ausgestaltung der Erfindung sieht vor, dass die zur Regelung verwendete Raumzeigergruppe in Abhängigkeit von einer Anzahl von Schalthandlungen ausgewählt wird, die zum Ändern von Phasenspannungen des Drei-Level-Wechselrichters bei Übergängen zwischen den Raumzeigern der Raumzeigergruppe erforderlich sind. Diese Ausgestaltung der Erfindung reduziert vorteilhaft Schaltverluste durch die Schalthandlungen.

Eine weitere Ausgestaltung der Erfindung sieht vor, dass die zur Regelung verwendete Raumzeigergruppe derart ausgewählt wird, dass bei Übergängen zwischen den Raumzeigern der Raumzeigergruppe keine Änderung einer Phasenspannung des Drei-Level-Wechselrichters um eine volle Zwischenkreisspannung des Zwischenkreises erforderlich ist. Durch diese Ausgestaltung der Erfindung werden vorteilhaft hohe Spannungsänderungen an einer mit dem Drei-Level-Wechselrichter verbundenen Last bei Schalthandlungen vermieden.

Eine weitere Ausgestaltung der Erfindung sieht vor, dass die zur Regelung verwendete Raumzeigergruppe derart ausgewählt wird, dass alle von den Raumzeigern der Raumzeigergruppe repräsentierten Schaltzustände in einer Phase des Drei-Level-Wechselrichters übereinstimmen. Durch diese Ausgestaltung der Erfindung kann ein so genanntes Flat-Top-Verhalten der Regelung erreicht werden, bei dem eine Phase während jeder Taktperiode der Regelung nicht geschaltet wird. Auch dadurch werden vorteilhaft Schaltverluste durch die Schalthandlungen reduziert.

Eine weitere Ausgestaltung der Erfindung sieht vor, dass die zur Regelung verwendete Raumzeigergruppe in Abhängigkeit von einem gewünschten Nullsystemverlauf ausgewählt wird. Durch diese Ausgestaltung der Erfindung kann vorteilhaft das Nullsystem durch die Auswahl der Raumzeigergruppe an die jeweiligen anwendungsabhängigen Anforderungen angepasst werden, beispielsweise um Spannungshübe bei Schalthandlungen, die Schaltfrequenz oder Anregungen von Systemschwingungen über parasitäre Effekte zu reduzieren.

Eine weitere Ausgestaltung der Erfindung sieht vor, dass als Hysteresestromregelung eine SDHC-Stromregelung verwendet wird. Unter einer so genannten SDHC-Stromregelung (SDHC = Switched Diamond Hysteresis Control) wird ein Stromregelungsverfahren verstanden, das beispielsweise in H. Wießmann, Hochdynamisches direktes Stromregelverfahren für Pulswechselrichter im Vergleich zu PWM-Verfahren, ISBN 978-3843904759, Verlag Dr. Hut 2012, beschrieben wird. Bei einem SDHC-Verfahren werden zur Stromregelung eines Wechselrichters zu jedem Zeitpunkt vier benachbarte Raumzeiger verwendet, deren Spitzen eine Raute bilden. Das SDHC-Verfahren verbindet vorteilhaft die hohe Dynamik und Robustheit einer direkten Hysteresestromregelung mit dem hervorragenden stationären Verhalten einer raumzeigermodulierten Regelung eines Wechselrichters.

Eine erfindungsgemäße Regelungsvorrichtung zur Regelung eines dreiphasigen Drei-Level-Wechselrichters umfasst eine Spannungsmessvorrichtung zur Erfassung einer Mittelpunktspannung des Drei-Level-Wechselrichters, eine Strommessvorrichtung zur Erfassung von Phasenströmen des Drei-Level-Wechselrichters, und einen Hystereseregler mit einer Stromregelungseinheit zur direkten Hysteresestromregelung der Phasenströme anhand von mehreren eine Raumzeigergruppe bildenden Raumzeigern, wobei die Stromregelungseinheit die Raumzeigergruppe in Abhängigkeit von den erfassten Phasenströmen und von der erfassten Mittelpunktspannung auswählt. Durch eine derartige Regelungsvorrichtung kann das erfindungsgemäße Verfahren zur Regelung eines dreiphasigen Drei-Level-Wechselrichters realisiert werden. Die Vorteile einer derartigen Regelungsvorrichtung entsprechen daher den oben genannten Vorteilen des erfindungsgemäßen Verfahrens.

Eine Ausgestaltung der Regelungsvorrichtung sieht vor, dass der Hystereseregler ein Hystereseglied zur Erzeugung eines Hysteresesignals für die erfasste Mittelpunktspannung aufweist, wobei das Hysteresesignal signalisiert, ob die erfasste Mittelpunktspannung ein vorgegebenes Hysteresefenster für die Mittelpunktspannung verlässt.

Eine weitere Ausgestaltung der Regelungsvorrichtung sieht vor, dass die Stromregelungseinheit eine andere Raumzeigergruppe als eine bisher verwendete Raumzeigergruppe aus zueinander redundanten Raumzeigergruppen zur Regelung der Phasenströme auswählt, um die Mittelpunktspannung in das Hysteresefenster zurückzuführen, wenn die Mittelpunktspannung das Hysteresefenster verlässt.

Die vorgenannten Ausgestaltungen der Regelungsvorrichtung entsprechen oben genannten Ausgestaltungen des erfindungsgemäßen Verfahrens und weisen diesen Ausgestaltungen des erfindungsgemäßen Verfahrens entsprechende oben genannte Vorteile auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: ein Ersatzschaltbild eines Drei-Level-Wechselrichters,
- FIG 2: einen Schaltplan eines Ausführungsbeispiels eines Drei-Level-Wechselrichters und einer Regelungsvorrichtung zur Regelung von Phasenströmen des DreiLevel-Wechselrichters,
- FIG 3: ein Hysteresediagramm für ein Hysteresesignal zur Regelung einer Mittelpunktspannung eines Drei-LevelWechselrichters, und
- FIG 4: ein Raumzeigerdiagramm eines Drei-Level-Wechselrichters.

Einander entsprechende Teile sind in den Figuren mit denselben Bezugszeichen versehen.

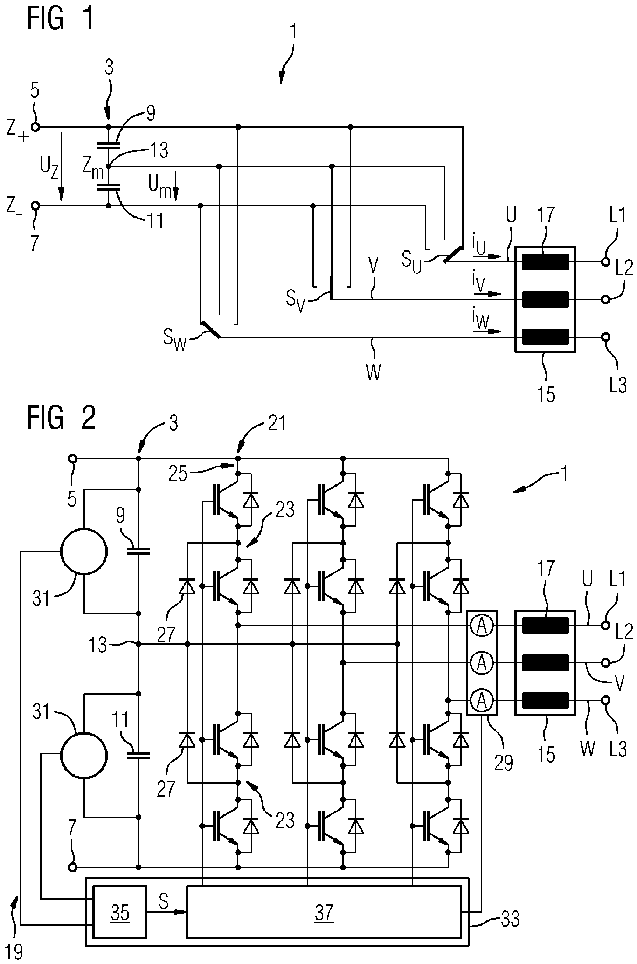

FIG 1 zeigt ein Ersatzschaltbild eines dreiphasigen Drei-Level-Wechselrichters 1.

Der Drei-Level-Wechselrichter 1 weist gleichspannungsseitig einen Zwischenkreis 3 auf. Der Zwischenkreis 3 weist einen ersten Anschluss 5, auf den ein erstes Zwischenkreispotential Z₊ gelegt wird, und einen zweiten Anschluss 7, auf den ein zweites Zwischenkreispotential Z₋ gelegt wird, auf. Die Differenz der Zwischenkreispotentiale Z₊, Z₋ ist eine Zwischenkreisspannung U_{Z} des Zwischenkreises 3. Die Anschlüsse 5, 7 sind jeweils über wenigstens einen Zwischenkreiskondensator 9, 11 mit einem Mittelpunkt 13 des Zwischenkreises 3 verbunden. Die Differenz eines Mittelpunktpotentials Zₘ an dem Mittelpunkt 13 und des zweiten Zwischenkreispotentials Z₋ wird im Folgenden als Mittelpunktspannung Uₘ des Zwischenkreises 3 und des Drei-Level-Wechselrichters 1 bezeichnet.

Ferner weist der Drei-Level-Wechselrichter 1 für jede seiner Phasen U, V, W einen Schalter S_{U}, S_{V}, S_{W} mit drei Phasenschaltzuständen auf. In einem ersten Phasenschaltzustand liegt die jeweilige Phase U, V, W auf dem ersten Zwischenkreispotential Z₊, in einem zweiten Phasenschaltzustand liegt die Phase U, V, W auf dem Mittelpunktpotential Zₘ und in dem dritten Phasenschaltzustand liegt die Phase U, V, W auf dem zweiten Zwischenkreispotential Z₋. In FIG 1 weist ein erster Schalter S_{U} für eine erste Phase U den ersten Phasenschaltzustand auf, ein zweiter Schalter S_{V} für eine zweite Phase V weist den zweiten Phasenschaltzustand auf, und der dritte Schalter S_{W} für die dritte Phase W weist den dritten Phasenschaltzustand auf.

Wechselspannungsseitig weist der Drei-Level-Wechselrichter 1 für jede Phase U, V, W eine Anschlussklemme L1, L2, L3 auf. Zwischen dem Schalter S_{U}, S_{V}, S_{W} und der Anschlussklemme L1, L2, L3 einer Phase U, V, W fließt ein Phasenstrom i_{U}, i_{V}, i_{W} der Phase U, V, W. Optional weist der Drei-Level-Wechselrichter 1 einen Filter 15 auf, der für jede Phase U, V, W wenigstens eine Induktivität 17 aufweist.

FIG 2 zeigt einen Schaltplan eines konkreten Ausführungsbeispiels eines dreiphasigen Drei-Level-Wechselrichters 1 sowie schematisch eine Regelungsvorrichtung 19 zur Regelung der Phasenströme i_{U}, i_{V}, i_{W}.

Jeder Schalter S_{U}, S_{V}, S_{W} wird in bekannter Weise durch eine Halbbrücke 21 mit zwei Halbbrückenzweigen 23 gebildet, die jeweils zwei Schaltglieder 25 aufweisen und über zwei Kopplungsdioden 27, deren Verbindung auf dem Mittelpunktpotential Zₘ liegt, miteinander verbunden sind. Jedes Schaltglied 25 weist beispielsweise einen Bipolartransistor mit isolierter Gate-Elektrode (IGBT = Insulated-Gate Bipolar Transistor) und eine dazu antiparallel geschaltete Diode auf.

Die Regelungsvorrichtung 19 umfasst eine Strommessvorrichtung 29 zur Erfassung von Istwerten der Phasenströme i_{U}, i_{V}, i_{W}, eine Spannungsmessvorrichtung 31 zur Erfassung der an den Zwischenkreiskondensatoren 9 und 11 anliegenden Spannungen und einen Hystereseregler 33 zur direkten Hysteresestromregelung der Phasenströme i_{U}, i_{V}, i_{W} und zur Regelung der Mittelpunktspannung Uₘ. Der Hystereseregler 33 weist ein Hystereseglied 35 zur Erzeugung eines Hysteresesignals S für die Mittelpunktspannung Uₘ und eine Stromregelungseinheit 37 zur Hysteresestromregelung der Phasenströme i_{U}, i_{V}, i_{W} in Abhängigkeit von den erfassten Istwerten der Phasenströme i_{U}, i_{V}, i_{W} und dem Hysteresesignal S auf. Die Stromregelungseinheit 37 erzeugt Schaltsignale, mit denen die Schaltglieder 25 angesteuert werden.

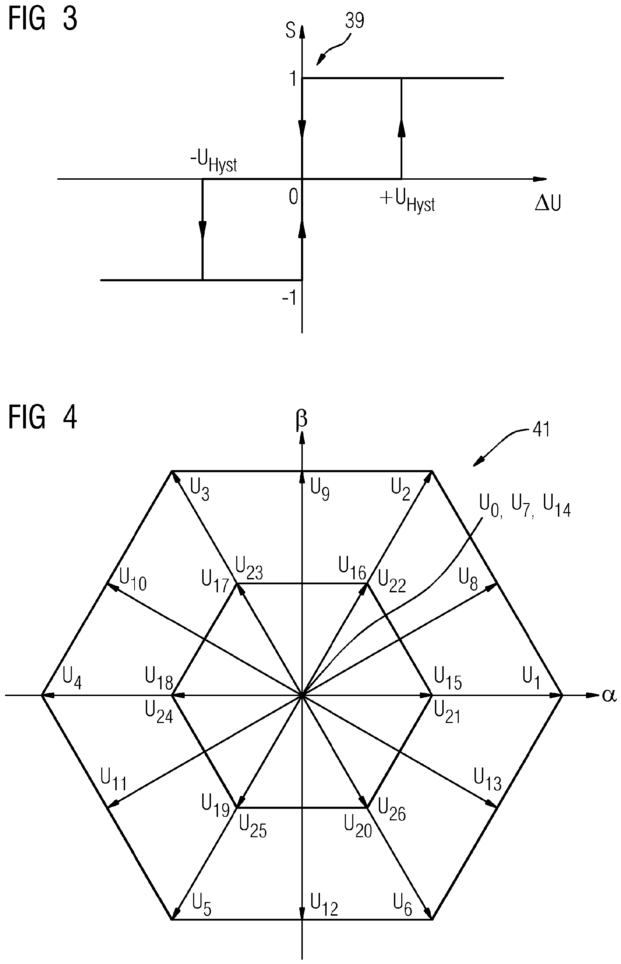

FIG 3 zeigt die Funktionsweise des Hysteresegliedes 35 anhand eines Hysteresediagramms 39 für das Hysteresesignal S in Abhängigkeit von der Spannungsdifferenz ΔU zwischen der an dem zweiten Zwischenkreiskondensator 11 anliegenden Mittelpunktspannung Uₘ=Zₘ-Z₋ und der an dem ersten Zwischenkreiskondensator 9 anliegenden Spannung Z₊-Zₘ. Die Spannungsdifferenz ΔU=2Zₘ-Z₋-Z₊ ist ein Maß für die Abweichung der Mittelpunktspannung Uₘ von der Hälfte der Zwischenkreisspannung U_{Z} (es gilt Uₘ-U_{Z}/2=2ΔU). Für die Spannungsdifferenz ΔU wird ein Hystereseintervall zwischen einer negativen Intervallgrenze -U_{Hyst} und einer positiven Intervallgrenze +U_{Hyst} vorgegeben. Das Hystereseintervall definiert für die Mittelpunktspannung Uₘ ein Hysteresefenster der Breite U_{Hyst}, das symmetrisch um die Hälfte der Zwischenkreisspannung U_{Z} herum liegt. Wenn die Spannungsdifferenz ΔU größer als die positive Intervallgrenze +U_{Hyst} ist (und somit die Mittelpunktspannung Uₘ größer als (U_{Z}+U_{Hyst})/2 ist), wird das Hysteresesignal S auf den Wert +1 gesetzt. Wenn die Spannungsdifferenz ΔU kleiner als die negative Intervallgrenze -U_{Hyst} ist (und somit die Mittelpunktspannung Uₘ kleiner als (U_{Z}-U_{Hyst})/2 ist), wird das Hysteresesignal S auf den Wert -1 gesetzt. Wenn die Spannungsdifferenz ΔU den Wert 0 über- oder unterschreitet, wird das Hysteresesignal S jeweils auf den Wert 0 gesetzt. Zwischen dem Wert 0 und der positiven Intervallgrenze +U_{Hyst} sowie zwischen dem Wert 0 und der negativen Intervallgrenze -U_{Hyst} bleibt das Hysteresesignal S jeweils unverändert.

Im Folgenden wird die Regelung des Drei-Level-Wechselrichters 1 anhand von FIG 4 beschrieben.

FIG 4 zeigt ein Raumzeigerdiagramm 41 eines gemäß den Figuren 1 und 2 ausgeführten Drei-Level-Wechselrichters 1 in einem statorfesten Koordinatensystem mit Koordinaten a, β. Das Raumzeigerdiagramm 41 weist 27 Raumzeiger U₀ bis U₂₆ auf. Jeder Raumzeiger U₀ bis U₂₆ repräsentiert in bekannter Weise einen Schaltzustand des Drei-Level-Wechselrichters 1, der sich aus den Phasenschaltzuständen der Schalter S_{U}, S_{V}, S_{W} der drei Phasen U, V, W ergibt. Ein Schaltzustand des Drei-Level-Wechselrichters 1 wird im Folgenden durch ein 3-Tupel (a, b, c) bezeichnet, wobei a den Phasenschaltzustand des ersten Schalters S_{U} bezeichnet, b den Phasenschaltzustand des zweiten Schalters S_{V} bezeichnet und c den Phasenschaltzustand des dritten Schalters S_{W} bezeichnet. Dabei nehmen a, b, c jeweils einen der Werte 1, 0, -1 an, wobei der Wert 1 für den ersten Phasenschaltzustand des jeweiligen Schalters S_{U}, S_{V}, S_{W} steht, der Wert 0 für den zweiten Phasenschaltzustand des jeweiligen Schalters S_{U}, S_{V}, S_{W} steht und der Wert -1 für den dritten Phasenschaltzustand des jeweiligen Schalters S_{U}, S_{V}, S_{W} steht. Beispielsweise repräsentiert der Raumzeiger U₈ den Schaltzustand (1,0,-1), der in FIG 1 dargestellt ist.

Die Raumzeiger U₀, U₇ und U₁₄ sind die so genannten Nullspannungsraumzeiger, die jeweils einen Schaltzustand repräsentieren, in dem alle drei Schalter S_{U}, S_{V}, S_{W} denselben Phasenzustand aufweisen. Der Raumzeiger U₀ repräsentiert den Schaltzustand (0,0,0), der Raumzeiger U₇ repräsentiert den Schaltzustand (1,1,1) und der Raumzeiger U₁₄ repräsentiert den Schaltzustand (-1,-1,-1). Die Nullspannungsraumzeiger werden durch den Koordinatenursprung des Raumzeigerdiagramms 41 dargestellt.

Die Nullspannungsraumzeiger bilden ein Beispiel so genannter redundanter Raumzeiger U₀, U₇, U₁₄ bis U₂₆, die im Raumzeigerdiagramm 41 zusammenfallen. Die von zwei redundanten Raumzeigern U₀, U₇, U₁₄ bis U₂₆ repräsentierten Schaltzustände sind verschieden, erzeugen jedoch (zumindest annähernd) dieselben Differenzen zwischen den einzelnen Phasenspannungen und werden deshalb durch im Raumzeigerdiagramm 41 zusammenfallende Raumzeiger U₀, U₇, U₁₄ bis U₂₆ repräsentiert. Da die Schaltzustände zweier redundanter Raumzeiger U₀, U₇, U₁₄ bis U₂₆ (zumindest annähernd) dieselben Differenzen zwischen den einzelnen Phasenspannungen erzeugen, haben sie auch (zumindest annähernd) dieselbe Wirkung auf eine an den Drei-Level-Wechselrichter 1 wechselspannungsseitig angeschlossene Last. Neben den Nullspannungsraumzeigern bilden die Raumzeigerpaare (U₁₅, U₂₁), (U₁₆, U₂₂), (U₁₇, U₂₃), (U₁₈, U₂₄), (U₁₉, U₂₅) und (U₂₀, U₂₆) jeweils ein Paar redundanter Raumzeiger U₁₅ bis U₂₆.

Die Phasenströme i_{U}, i_{V}, i_{W} werden mit der Stromregelungseinheit 37 mit einer direkten Hysteresestromregelung anhand von mehreren, eine Raumzeigergruppe bildenden Raumzeigern U₀ bis U₂₆ geregelt. Welche Raumzeigergruppe zur Regelung der Phasenströme i_{U}, i_{V}, i_{W} jeweils ausgewählt wird, hängt von den Istwerten der Phasenströme i_{U}, i_{V}, i_{W} und von dem Hysteresesignal S sowie von der Sollausgangsspannung des Drei-Level-Wechselrichters 1 ab. Dabei wird durch die Auswahl der Raumzeigergruppe in Abhängigkeit von dem Hysteresesignal S auch die Mittelpunktspannung Uₘ geregelt, so dass die Mittelpunktspannung Uₘ in das durch das Hysteresediagramm 39 definierte Hysteresefenster für die Mittelpunktspannung Uₘ zurückgeführt wird, wenn sie es verlässt. Dazu wird, wenn die Mittelpunktspannung Uₘ das Hysteresefenster verlässt, eine andere Raumzeigergruppe als die bisher verwendete Raumzeigergruppe aus zueinander redundanten Raumzeigergruppen zur Regelung der Phasenströme i_{U}, i_{V}, i_{W} ausgewählt, um die Mittelpunktspannung Uₘ in das Hysteresefenster zurückzuführen. Als zueinander redundante Raumzeigergruppen werden dabei Raumzeigergruppen bezeichnet, die sich voneinander nur durch verschiedene redundante Raumzeiger U₀, U₇, U₁₄ bis U₂₆ unterscheiden.

Die Regelung nutzt aus, dass zwei redundante Raumzeiger U₀, U₇, U₁₄ bis U₂₆ zwar Schaltzustände repräsentieren, die (zumindest annähernd) dieselben Differenzen zwischen den einzelnen Phasenspannungen erzeugen, jedoch unterschiedliche Auswirkungen auf die Mittelpunktspannung Uₘ haben, so dass die Mittelpunktspannung Uₘ durch den Wechsel von einer bisher zur Regelung verwendeten Raumzeigergruppe zu einer dazu redundanten Raumzeigergruppe geändert werden kann.

Zur Optimierung der Regelung wird die zur Regelung verwendete Raumzeigergruppe ferner vorzugsweise derart ausgewählt, dass sie wenigstens eines der folgenden Kriterien (i) bis (iv) erfüllt:
(i) Die Übergänge zwischen den Raumzeigern U₀ bis U₂₆ der Raumzeigergruppe erfordern möglichst wenige Schalthandlungen zum Umschalten der Phasenspannungen des Drei-Level-Wechselrichter 1. Dadurch werden vorteilhaft Schaltverluste durch die Schalthandlungen reduziert.
(ii) Die Übergänge zwischen den Raumzeigern U₀ bis U₂₆ der Raumzeigergruppe erfordern keine Änderung einer Phasenspannung um die volle Zwischenkreisspannung U_{Z}. Dadurch werden vorteilhaft hohe Spannungssprünge an einer mit dem Drei-Level-Wechselrichter 1 verbundenen Last vermieden.
(iii) Die Raumzeigergruppe erzeugt möglichst geringe Sprünge im gebildeten Nullsystem. Dadurch werden vorteilhaft Anregungen von Systemschwingungen über parasitäre Effekte und Spannungsbelastungen durch Sprünge im Nullsystem reduziert.
(iv) Alle von den Raumzeigern U₀ bis U₂₆ der Raumzeigergruppe repräsentierten Schaltzustände stimmen in einer Phase überein. Dadurch kann ein so genanntes Flat-Top-Verhalten der Regelung erreicht werden, bei dem eine Phase während jeder Taktperiode der Regelung nicht geschaltet wird. Auch dadurch werden vorteilhaft Schaltverluste durch die Schalthandlungen reduziert.

Vorzugsweise wird dasjenige dieser Kriterien bevorzugt verwendet, welches das von dem Drei-Level-Wechselrichter 1 und einer mit ihm verbundenen Last gebildete System optimiert.

Um die oben beschriebene Regelung der Phasenströme i_{U}, i_{V}, i_{W} und der Mittelpunktspannung Uₘ eingehender zu erläutern, wird im Folgenden davon ausgegangen, dass zur Regelung der Phasenströme i_{U}, i_{V}, i_{W} jeweils eine Raumzeigergruppe verwendet wird, die von vier der Raumzeiger U₀ bis U₂₆ gebildet wird, die im Raumzeigerdiagramm 41 eine Raute aufspannen. Diese Bildung der Raumzeigergruppen wird in der SDHC-Stromregelung verwendet, die erfindungsgemäß bevorzugt zur Hysteresestromregelung der Phasenströme i_{U}, i_{V}, i_{W} verwendet wird.

Eine derartige Raute wird beispielsweise durch die vier Raumzeiger U₁₆, U₂₃, U₃ und U₉ aufgespannt, die die Raumzeigergruppe (U₆, U₂₃, U₃, U₉) bilden. Zu dieser Raumzeigergruppe sind die Raumzeigergruppen (U₂₂, U₂₃, U₃, U₉), (U₁₆, U₁₇, U₃, U₉) und (U₂₂, U₁₇, U₃, U₉) redundant. Die folgende Tabelle zeigt die Schaltzustände, die von den Raumzeigern U₁₆, U₂₂, U₁₇, U₂₃, U₃, U₉ dieser zueinander redundanten Raumzeigergruppen repräsentiert werden, und einen Mittelpunktstrom, der von diesen Schaltzuständen jeweils auf den Mittelpunkt 13 des Zwischenkreises 3 geleitet wird:

| Raumzeiger | Schalt zustand | Mittelpunktstrom |
|---|---|---|
| U₁₆ | (1,1,0) | i_{W} |
| U₂₂ | (0,0,-1) | -i_{W} |
| U₉ | (0,1,-1) | i_{U} |
| U₁₇ | (0,1,0) | -i_{V} |
| U₂₃ | (-1,0,-1) | i_{V} |
| U₃ | (-1,1,-1) | 0 |

Bei der Raumzeigergruppe (U₁₆, U₂₃, U₃, U₉) erfordert der Übergang von dem Raumzeiger U₁₆ zu dem Raumzeiger U₂₃ eine Änderung des Schaltzustands in der Phase U von 1 auf -1 und damit eine Änderung der Phasenspannung der Phase U um die volle Zwischenkreisspannung U_{Z}. Daher erfüllt die Raumzeigergruppe (U₁₆, U₂₃, U₃, U₉) nicht das oben genannte Kriterium (ii). Überdies erfordert der Übergang von dem Raumzeiger U₁₆ zu dem Raumzeiger U₂₃ eine Umschaltung aller drei Phasen U, V, W. Daher erfüllt die Raumzeigergruppe (U₁₆, U₂₃, U₃, U₉) auch nicht das oben genannte Kriterium (iv). Deshalb wird die Raumzeigergruppe (U₁₆, U₂₃, U₃, U₉) vorzugsweise nicht zur Regelung verwendet.

Bei der Raumzeigergruppe (U₂₂, U₂₃, U₃, U₉) erfordern die Übergänge zwischen den Raumzeigern U₂₂, U₂₃, U₃, U₉ bei einem Umlauf um die Raute nur insgesamt vier Schalthandlungen. Keiner dieser Übergänge erfordert eine Änderung einer Phasenspannung um die volle Zwischenkreisspannung U_{Z}. Ferner stimmen alle von den Raumzeigern U₂₂, U₂₃, U₃, U₉ repräsentierten Schaltzustände in der Phase W überein. Die Raumzeigergruppe (U₂₂, U₂₃, U₃, U₉) wird daher bevorzugt zur Regelung verwendet.

Bei der Raumzeigergruppe (U₁₆, U₁₇, U₃, U₉) erfordern die Übergänge zwischen den Raumzeigern U₁₆, U₁₇, U₃, U₉ bei einem Umlauf um die Raute insgesamt sechs Schalthandlungen. Keiner dieser Übergänge erfordert eine Änderung einer Phasenspannung um die volle Zwischenkreisspannung U_{Z}. Ferner stimmen alle von den Raumzeigern U₁₆, U₁₇, U₃, U₉ repräsentierten Schaltzustände in der Phase V überein. Die Raumzeigergruppe (U₁₆, U₁₇, U₃, U₉) wird daher ebenfalls bevorzugt zur Regelung verwendet.

Bei der Raumzeigergruppe (U₂₂, U₁₇, U₃, U₉) erfordern die Übergänge zwischen den Raumzeigern U₂₂, U₁₇, U₃, U₉ bei einem Umlauf um die Raute ebenfalls insgesamt sechs Schalthandlungen, wobei keiner dieser Übergänge eine Änderung einer Phasenspannung um die volle Zwischenkreisspannung U_{Z} erfordert. Allerdings stimmen die von den Raumzeigern U₂₂, U₁₇, U₃, U₉ repräsentierten Schaltzustände in keiner Phase U, V, W sämtlich überein. Daher wird die Raumzeigergruppe (U₂₂, U₁₇, U₃, U₉) vorzugsweise nicht zur Regelung verwendet.

Vorzugsweise wird daher die Raumzeigergruppe (U₂₂, U₂₃, U₃, U₉) oder die Raumzeigergruppe (U₁₆, U₁₇, U₃, U₉) zur Regelung der Phasenströme i_{U}, i_{V}, i_{W} ausgewählt, wenn die Regelung in der diesen Raumzeigergruppen entsprechenden Raute erfolgt. Je nach Anwendung wird diejenige Raumzeigergruppe (U₂₂, U₂₃, U₃, U₉) oder (U₁₆, U₁₇, U₃, U₉) ausgewählt, die die jeweiligen Anforderungen, beispielsweise an die Schaltfrequenz oder das Nullsystem, am besten erfüllt. Solange das Hysteresesignal S den Wert 0 annimmt, werden die Phasenströme i_{U}, i_{V}, i_{W} mit der verwendeten Hysteresestromregelung, beispielsweise mit der SDHC-Stromregelung, unabhängig von dem Hysteresesignal S anhand der jeweils ausgewählten Raumzeigergruppe geregelt. Die Mittelpunktspannung Uₘ wird dabei nicht geregelt, sondern ergibt sich dabei aus der Hysteresestromregelung der Phasenströme i_{U}, i_{V}, i_{W}. Wenn das Hysteresesignal S den Wert 1 oder -1 annimmt, wird die bisher zur Regelung der Phasenströme i_{U}, i_{V}, i_{W} verwendete Raumzeigergruppe durch eine der zu dieser Raumzeigergruppe redundanten Raumzeigergruppen (U₁₆, U₂₃, U₃, U₉), (U₂₂, U₂₃, U₃, U₉), (U₁₆, U₁₇, U₃, U₉), (U₂₂, U₁₇, U₃, U₉) ersetzt, um die Mittelpunktspannung Uₘ in das Hysteresefenster für die Mittelpunktspannung Uₘ zurückzuführen. Dabei wird die bisher verwendete Raumzeigergruppe vorzugsweise durch eine der beiden bevorzugten Raumzeigergruppen (U₂₂, U₂₃, U₃, U₉), (U₁₆, U₁₇, U₃, U₉) ersetzt, sofern dadurch die Mittelpunktspannung Uₘ in das Hysteresefenster zurückgeführt werden kann.

Entsprechend werden die Phasenströme i_{U}, i_{V}, i_{W} und die Mittelpunktspannung Uₘ in anderen Bereichen des Raumzeigerdiagramms 41 anhand von redundanten Raumzeigergruppen geregelt, die in dem jeweiligen Bereich des Raumzeigerdiagramms 41 eine Raute bilden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. Verfahren zur Regelung eines dreiphasigen Drei-Level-Wechselrichters (1), wobei
- Phasenströme (i_{U}, i_{V}, i_{W}) des Drei-Level-Wechselrichters (1) mit einer direkten Hysteresestromregelung anhand von mehreren, eine Raumzeigergruppe bildenden Raumzeigern (U₀ bis U₂₆) geregelt werden, und
- eine Mittelpunktspannung (Uₘ) eines gleichspannungsseitigen Zwischenkreises (3) des Drei-Level-Wechselrichters (1) geregelt wird, indem die zur Regelung der Phasenströme (i_{U}, i_{V}, i_{W}) verwendete Raumzeigergruppe aus mehreren zueinander redundanten Raumzeigergruppen in Abhängigkeit von der Mittelpunktspannung (Uₘ) ausgewählt wird,
- **dadurch gekennzeichnet, dass** zur Regelung der Mittelpunktspannung (Uₘ) ein Hysteresefenster für die Mittelpunktspannung (Uₘ) vorgegeben wird, und, wenn die Mittelpunktspannung (Uₘ) das Hysteresefenster verlässt, eine andere Raumzeigergruppe als eine bisher verwendete Raumzeigergruppe aus den zueinander redundanten Raumzeigergruppen zur Regelung der Phasenströme (i_{U}, i_{V}, i_{W}) ausgewählt wird, um die Mittelpunktspannung (Uₘ) in das Hysteresefenster zurückzuführen.

2. Verfahren nach einem der vorhergehenden Ansprüche, **dadurch gekennzeichnet, dass** die zur Regelung verwendete Raumzeigergruppe in Abhängigkeit von einer Anzahl von Schalthandlungen ausgewählt wird, die zum Ändern von Phasenspannungen des Drei-Level-Wechselrichters (1) bei Übergängen zwischen den Raumzeigern (U₀ bis U₂₆) der Raumzeigergruppe erforderlich sind.

3. Verfahren nach einem der vorhergehenden Ansprüche, **dadurch gekennzeichnet, dass** die zur Regelung verwendete Raumzeigergruppe derart ausgewählt wird, dass bei Übergängen zwischen den Raumzeigern (U₀ bis U₂₆) der Raumzeigergruppe keine Änderung einer Phasenspannung des Drei-Level-Wechselrichters (1) um eine volle Zwischenkreisspannung (U_{Z}) des Zwischenkreises (3) erforderlich ist.

4. Verfahren nach einem der vorhergehenden Ansprüche, **dadurch gekennzeichnet, dass** die zur Regelung verwendete Raumzeigergruppe derart ausgewählt wird, dass alle von den Raumzeigern (U₀ bis U₂₆) der Raumzeigergruppe repräsentierten Schaltzustände in einer Phase (U, V, W) des Drei-Level-Wechselrichters (1) übereinstimmen.

5. Verfahren nach einem der vorhergehenden Ansprüche, **dadurch gekennzeichnet, dass** die zur Regelung verwendete Raumzeigergruppe in Abhängigkeit von einem gewünschten Nullsystemverlauf ausgewählt wird.

6. Verfahren nach einem der vorhergehenden Ansprüche, **dadurch gekennzeichnet, dass** als Hysteresestromregelung eine SDHC-Stromregelung verwendet wird.

7. Regelungsvorrichtung (19) zur Regelung eines dreiphasigen Drei-Level-Wechselrichters (1), die Regelungsvorrichtung (19) umfassend
- eine Spannungsmessvorrichtung (31) ausgelegt, eine Mittelpunktspannung (Uₘ) des Drei-Level-Wechselrichters (1), zu erfassen
- eine Strommessvorrichtung (29) ausgelegt, Phasenströme (i_{U}, i_{V}, i_{W}) des Drei-Level-Wechselrichters (1), zu erfassen und
- einen Hystereseregler (33) mit einer Stromregelungseinheit (37) zur direkten Hysteresestromregelung der Phasenströme (i_{U}, i_{V}, i_{W}) anhand von mehreren eine Raumzeigergruppe bildenden Raumzeigern (U₀ bis U₂₆), wobei die Stromregelungseinheit (37) ausgelegt ist,
die Raumzeigergruppe in Abhängigkeit von den erfassten Phasenströmen (i_{U}, i_{V}, i_{W}) und von der erfassten Mittelpunktspannung (Uₘ) auszuwählen, **dadurch gekennzeichnet, dass** der Hystereseregler (33) ein Hystereseglied (35) zur Erzeugung eines Hysteresesignals (S) für die erfasste Mittelpunktspannung (Uₘ) aufweist, wobei das Hysteresesignal (S) signalisiert, ob die erfasste Mittelpunktspannung (Uₘ) ein vorgegebenes Hysteresefenster für die Mittelpunktspannung (Uₘ) verlässt, und die Stromregelungseinheit (37) ausgelegt ist, eine andere Raumzeigergruppe als eine bisher verwendete Raumzeigergruppe aus zueinander redundanten Raumzeigergruppen zur Regelung der Phasenströme (i_{U}, i_{V}, i_{W}) auszuwählen, um die Mittelpunktspannung (Uₘ) in das Hysteresefenster zurückzuführen, wenn die Mittelpunktspannung (Uₘ) das Hysteresefenster verlässt.

## Claims

1. Method for regulating a three-phase three-level inverter (1), wherein
- phase currents (i_{U}, i_{V}, i_{W}) of the three-level inverter (1) are regulated with a direct hysteresis current regulation on the basis of a number of space phasors (U₀ to U₂₆) forming a space phasor group, and
- a central point voltage (Uₘ) of a DC-side intermediate circuit (3) of the three-level inverter (1) is regulated by the space phasor group used to regulate the phase currents (i_{U}, i_{V}, i_{W}) being selected from a number of space phasor groups which are redundant with respect to one another as a function of the central point voltage (Uₘ),
**characterised in that**
in order to regulate the central point voltage (Uₘ) a hysteresis window is predetermined for the central point voltage (Uₘ) and if the central point voltage ((Uₘ) leaves the hysteresis window, another space phasor group is selected as a previously used space phasor group from the space phasor groups, which are redundant with respect to one another, for regulating the phase currents (i_{U}, i_{V}, i_{W}) in order to feed the central point voltage (Uₘ) back into the hysteresis window.

2. Method according to one of the preceding claims, **characterised in that** the space phasor group used for regulation is selected as a function of a number of switching operations which are required to change from phase voltages of the three-level inverter (1) with transitions between the space phasors (U₀ to U₂₆) of the space phasor group.

3. Method according to one of the preceding claims, **characterised in that** the space phasor group used for regulation is selected so that with transitions between the space phasors (U₀ to U₂₆) of the space phasor group, there is no need to change a phase voltage of the three level inverter (1) by a full intermediate circuit voltage (U_{z}) of the intermediate circuit (3).

4. Method according to one of the preceding claims, **characterised in that** the space phasor group used for regulation is selected so that all switching states represented by the space phasors (U₀ to U₂₆) of the space phasor group match in a phase (U, V, W) of the three level inverter (1).

5. Method according to one of the preceding claims, **characterised in that** the space phasor group used for regulation is selected as a function of a desired zero system profile.

6. Method according to one of the preceding claims, **characterised in that** an SDHC power regulation is used as a hysteresis current regulation.

7. Regulation device (19) for regulating a three-phase three-level inverter (1), the regulation device (19) comprising
- a voltage measuring device (31) designed to acquire a central point voltage (Uₘ) of the three-level inverter (1),
- a current measuring device (29) designed to acquire phase currents (i_{U}, i_{V}, i_{W}) of the three-level inverter (1), and
- a hysteresis regulator (33) with a current regulation unit (37) for direct hysteresis current regulation of the phase currents (i_{U}, i_{V}, i_{W}) on the basis of a number of space phasors (U₀ to U₂₆) forming a space phasor group, wherein the current regulation unit (37) is designed to select the space phasor group as a function of the acquired phase currents (i_{U}, i_{V}, i_{W}) and of the acquired central point voltage (Uₘ),
**characterised in that**
the hysteresis regulator (33) has a hysteresis element (35) for generating a hysteresis signal (S) for the acquired central point voltage (Uₘ), wherein the hysteresis signal (S) indicates whether the acquired central point voltage (Uₘ) leaves a predetermined hysteresis window for the central point voltage (Um), and the current regulation unit (37) is designed to select another space phasor group as a previously used space phasor group from space phasor groups, which are redundant with respect to one another, for regulating the phase currents (i_{U}, i_{V}, i_{W}) in order to feed the central point voltage (Uₘ) back into the hysteresis window if the central point voltage (Um) leaves the hysteresis window.

## Revendications

1. Procédé de réglage d'un onduleur (1) triphasé à trois niveaux, dans lequel
- on règle des courants (iᵤ, iᵥ, i_{w}) de phase de l'onduleur (1) à trois niveau par un réglage direct de courant d'hystérésis à l'aide de plusieurs vecteurs (U₀ à U₂₆) d'espace formant un groupe de vecteurs d'espace, et
- on règle une tension (Um) de point médian d'un circuit (3) intermédiaire du côté de la tension continue de l'onduleur (1) à trois niveaux, en choisissant, en fonction de la tension (Uₘ) de point médian, le groupe de vecteurs d'espace utilisé pour régler les courants (iᵤ, iᵥ, i_{w}) de phase parmi plusieurs groupes de vecteurs d'espace redondants,
- **caractérisé en ce que**
pour réguler la tension (Uₘ) de point médian, on prescrit une fenêtre d'hystérésis pour la tension (Uₘ) de point médian et, si la tension (Uₘ) de point médian quitte la fenêtre d'hystérésis, on choisit, pour régler les courants (iᵤ, iᵥ, i_{w}) de phase, parmi les groupes de vecteurs d'espace redondants entre eux, un groupe de vecteurs d'espace autre qu'un groupe de vecteurs d'espace utilisé jusqu'ici, afin de ramener la tension (Uₘ) de point médian dans la fenêtre d'hystérésis.

2. Procédé suivant l'une des revendications précédentes, **caractérisé en ce que** l'on choisit le groupe de vecteurs d'espace utilisé pour le réglage en fonction d'un nombre de manipulations de commutation, qui sont nécessaires pour modifier les tensions de phase de l'onduleur (1) à trois niveaux pour des transitions entre les vecteurs d'espace (U₀ à U₂₆).

3. Procédé suivant l'une des revendications précédentes, caractérisé en que l'on choisit le groupe de vecteurs d'espace utilisé pour le réglage de manière à ce que, pour des transitions entre les vecteurs d'espace (U₀ à U₂₆), le groupe de vecteurs d'espace ne nécessite pas une modification, d'une tension (U_{z}) de circuit intermédiaire complète du circuit (3) intermédiaire, d'une tension de phase de l'onduleur (1) à trois niveaux.

4. Procédé suivant l'une des revendications précédentes, **caractérisé en ce que** l'on choisit le groupe de vecteurs d'espace utilisé pour le réglage de manière à ce que tous les états de commutation représentés par les vecteurs d'espace (U₀ à U₂₆) du groupe de vecteurs d'espace coïncident dans une phase (U, V, W) de l'onduleur (1) à trois niveaux.

5. Procédé suivant l'une des revendications précédentes, **caractérisé en ce que** l'on choisit le groupe de vecteurs d'espace utilisé pour le réglage en fonction d'une marche souhaitée du système homopolaire.

6. Procédé suivant l'une des revendications précédentes, **caractérisé en ce que** l'on utilise un réglage de courant SDHC, comme réglage de courant d'hystérésis.

7. Montage (19) de réglage pour régler un onduleur (1) triphasé à trois niveaux, le montage (19) de réglage comprenant
- un montage (31) de mesure de la tension, conçu pour détecter une tension (Uₘ) de point médian de l'onduleur (1) à trois niveaux,
- un montage (29) de mesure du courant, conçu pour détecter des courants (iᵤ, iᵥ, i_{w}) de phase de l'onduleur (1) à trois niveaux, et
- un régleur (33) d'hystérésis ayant une unité (37) de réglage du courant pour le réglage direct du courant d'hystérésis des courants (iᵤ, iᵥ, i_{w}) de phase à l'aide de plusieurs vecteurs d'espace (U₀ à U₂₆) formant un groupe de vecteurs d'espace, l'unité (37) de réglage de courant étant conçue pour choisir le groupe de vecteurs d'espace en fonction des courants (iᵤ, iᵥ, i_{w}) de phase détectés et de la tension (Uₘ) de point médian détectée,
**caractérisé en ce que**
le régleur (33) d'hystérésis a un organe (35) d'hystérésis de production d'un signal (S) d'hystérésis pour la tension (Uₘ) de point médian détectée, le signal (S) d'hystérésis signalant si la tension (Uₘ) de point médian détectée quitte une fenêtre d'hystérésis donnée à l'avance pour la tension (Uₘ) de point médian, et l'unité (37) de réglage de courant étant conçue pour choisir, pour régler les courants (iᵤ, iᵥ, i_{w}) de phase, parmi des groupes de vecteurs d'espace redondants entre eux, un groupe de vecteurs d'espace qu'un groupe de vecteurs d'espace utilisé jusqu'ici, afin de ramener la tension (Uₘ) de point médian dans la fenêtre d'hystérésis, si la tension (Uₘ) de point médian quitte la fenêtre d'hystérésis.
